# EUROPEAN PATENT SPECIFICATION

(11) **EP 3 015 780 B1**
(45) Date of publication and mention of the grant of the patent: **01.04.2020**
(21) Application number: 15191507.1
(22) Date of filing: 26.10.2015
(51) Int. Cl.: F24F 11/00, F24F 3/16

(54) **METHOD AND DEVICE FOR CONTROLLING PURIFICATION OF AIR**
VERFAHREN UND VORRICHTUNG ZUR LUFTREINIGUNGSSTEUERUNG
PROCÉDÉ ET DISPOSITIF POUR COMMANDER LA PURIFICATION DE L'AIR

(30) Priority: 29.10.2014 CN 201410596709
(43) Date of publication of application: 04.05.2016
(73) Proprietor: Xiaomi Inc., Beijing 100085 (CN)
(72) Inventor: ZHANG, Bin, 100085 Haidian District (CN); SU, Jun, 100085 Haidian District (CN); XIA, Yongfeng, 100085 Haidian District (CN); HU, Yunlin, 100085 Haidian District (CN); WANG, Yang, 100085 Haidian District (CN); CHEN, Hao, 100085 Haidian District (CN)
(74) Representative: Reeve, Nicholas Edward

(56) References cited:
- WO-A1-2011/127812
- CN-A- 104 048 387
- CN-Y- 200 972 223
- US-A1- 2012 247 326

## Description

### TECHNICAL FIELD

The present disclosure generally relates to the field of smart terminals, and more particularly, to a method for controlling a purification of air and a device for controlling a purification of air.

### BACKGROUND

With the development of science and technology, people pay more and more attention to the quality of their living environment, including a variety of factors, such as water, air and radiation. In recent years, with the worsening of air pollution, PM2.5 is gradually concerned by more and more people. The Chinese name of PM2.5 is a fine particulate matter, which mainly refers to a particulate matter with an aerodynamic equivalent diameter less than or equal to 2.5 microns in the ambient air, and has a significant impact on air quality, visibility, etc. PM2.5 may be suspended in the air for a long time. The higher the concentration of PM2.5 in the air, the more severe the air pollution is.

In the related art, PM2.5 in indoor air may be filtered by mounting an air purifier so as to purify the air.

CN104048387 discloses an air purifier adjusting control method, device and system and an air purifier. The air purifier adjusting control method includes the steps of collecting air purifying information which includes filtering screen air pass total amount, filtering screen work duration and air quality information, and carrying out adjusting control on the air purifier according to the air purifying information, wherein adjusting control includes filtering screen replacement prompt sending and adjustment of the rotation speed of the air purifier. By means of the air purifier adjusting control method, device and system and the air purifier, according to the filtering screen air passing total amount and the filtering work duration, filtering screen replacement prompts are sent, the rotation speed of the air purifier is automatically adjusted according to the air quality information, and the requirement for actual adjustment control of the air purifier can be met.

US2012247326 discloses an HVAC system with an electrically powered air cleaner, a fan configured to selectively move air through the air cleaner, and a controller having an interface for receiving a selection of a clean air cycle. The controller is configured to control a clean air delivery rate (CADR) of the HVAC system for a clean air cycle duration in response to a receipt of a selection of the clean air cycle. A method of controlling air cleaning includes displaying a first clean air cycle that is configured to control a clean air delivery rate for a first clean air cycle duration wherein the first clean air cycle is associated with a first air flow related setting and a first air cleaner power level setting, selecting the first clean air cycle, and overriding at least one of a previous air flow related setting and a previous air cleaner power level setting.

### SUMMARY OF THE INVENTION

The present disclosure provides a method for controlling a purification of air and a device for controlling a purification of air.

In a first aspect, the present disclosure provides a method for controlling a purification of air, including: acquiring a target quality of air to be purified; detecting a current quality of the air to be purified, and determining a quota of an air purifier according to the target quality and the current quality; calculating a purification duration necessary for the air purifier to complete the quota according to a purification efficiency of the air purifier; and starting the air purifier, and displaying in real time a remaining time according to the purification duration; and wherein calculating the purification duration necessary for the air purifier to complete the quota according to the purification efficiency of the air purifier comprises: collecting a historical purification record of the air purifier, wherein the historical purification record comprises an air quality before purification, an air quality after purification, a purification start time point, and a purification end time point; estimating the purification efficiency of the air purifier according to the historical purification record; and calculating the purification duration necessary for the air purifier to complete the quota according to the purification efficiency of the air purifier.

In conjunction with the first aspect, in a first possible implementation, the method further includes: receiving a control instruction from a terminal device, in which the control instruction includes the target quality of the air to be purified and a purification end time of the air to be purified. Acquiring the target quality of the air to be purified includes: analyzing the control instruction to obtain the target quality of the air to be purified. Starting the air purifier includes: determining a purification start time according to the purification end time and the purification duration; and starting the air purifier when the purification start time is reached.

In conjunction with the first aspect, in a second possible implementation, the method further includes: setting an air quality index level according to a concentration of PM2.5 in the air, in which the air quality index level includes "excellent", "good", "lightly polluted", "moderately polluted", "heavily polluted", and "severely polluted". Acquiring the target quality of the air to be purified includes: acquiring the air quality index level selected by a user, and determining the air quality index level selected by the user as the target quality of the air to be purified.

In conjunction with the second possible implementation of the first aspect, in a third possible implementation, determining the quota of the air purifier according to the target quality and the current quality includes: acquiring a total volume of the air to be purified; and determining the quota according to the total volume and a difference between concentrations of PM2.5 in unit volume of air in the target quality and the current quality.

In conjunction with the third possible implementation of the first aspect, in a fourth possible implementation, calculating the purification duration necessary for the air purifier to complete the quota according to the purification efficiency of the air purifier includes: determining the purification efficiency of the air purifier according to a power of the air purifier and a purification capacity of a filter element in the air purifier, in which the purification efficiency is positively correlated to the power, and the purification efficiency is positively correlated to the purification capacity of the filter element.

In a second aspect, the present disclosure provides a device for controlling a purification of air, including: an acquiring module configured to acquire a target quality of air to be purified; a determining module configured to detect a current quality of the air to be purified, and to determine a quota of an air purifier according to the target quality acquired by the acquiring module and the current quality; a calculating module configured to calculate a purification duration necessary for the air purifier to complete the quota determined by the determining module according to a purification efficiency of the air purifier; and a control module configured to start the air purifier, and to display in real time a remaining time according to the purification duration calculated by the calculating module; and wherein the calculating module comprises: a collecting sub-module (331) configured to collect a historical purification record of the air purifier, in which the historical purification record comprises an air quality before purification, an air quality after purification, a purification start time point, and a purification end time point; an estimating sub-module (332) configured to estimate the purification efficiency of the air purifier according to the historical purification record collected by the collecting sub-module; and a calculating sub-module (333) configured to calculate the purification duration necessary for the air purifier to complete the quota according to the purification efficiency of the air purifier estimated by the estimating sub-module.

In conjunction with the second aspect, in a first possible implementation, the device further includes: a receiving module configured to receive a control instruction from a terminal device, in which the control instruction includes the target quality of the air to be purified and a purification end time of the air to be purified. The acquiring module is configured to analyze the control instruction received by the receiving module to obtain the target quality of the air to be purified. The control module is configured to determine a purification start time according to the purification end time and the purification duration, and to start the air purifier when the purification start time is reached.

In conjunction with the second aspect, in a second possible implementation, the device further includes: a setting module configured to set an air quality index level according to a concentration of PM2.5 in the air, in which the air quality index level includes "excellent", "good", "lightly polluted", "moderately polluted", "heavily polluted", and "severely polluted". The acquiring module is configured to acquire the air quality index level selected by a user, and to determine the air quality index level selected by the user as the target quality of the air to be purified.

In conjunction with the second possible implementation of the second aspect, in a third possible implementation, the determining module includes: an acquiring sub-module configured to acquire a total volume of the air to be purified; and a determining sub-module configured to determine the quota according to the total volume acquired by the acquiring sub-module and a difference between concentrations of PM2.5 in unit volume of air in the target quality and the current quality.

In conjunction with the third possible implementation of the second aspect, in a forth possible implementation, the calculating module is configured to determine the purification efficiency of the air purifier according to a power of the air purifier and a purification capacity of a filter element in the air purifier, in which the purification efficiency is positively correlated to the power, and the purification efficiency is positively correlated to the purification capacity of the filter element.

In a third aspect, the present disclosure further provides a program product having stored therein instructions that, when executed by a processor, causes the processor to perform the steps of: acquiring a target quality of air to be purified; detecting a current quality of the air to be purified, and determining a quota of an air purifier according to the target quality and the current quality; calculating a purification duration necessary for the air purifier to complete the quota according to a purification efficiency of the air purifier; and starting the air purifier, and displaying in real time a remaining time according to the purification duration, and wherein calculating the purification duration necessary for the air purifier to complete the quota according to the purification efficiency of the air purifier comprises: collecting a historical purification record of the air purifier, wherein the historical purification record comprises an air quality before purification, an air quality after purification, a purification start time point, and a purification end time point; estimating the purification efficiency of the air purifier according to the historical purification record; and calculating the purification duration necessary for the air purifier to complete the quota according to the purification efficiency of the air purifier.

The technical solution provided by embodiments of the present disclosure may have the following advantageous effects: when the air needs to be purified, a purification duration necessary to complete this purification may be determined according to an air quality before the purification and an air quality after the purification, and after the air purifier is started, the countdown is performed to display the progress of air purification, such that it is convenient for a user to use the air purifier.

It is to be understood that both the foregoing general description and the following detailed description are exemplary and explanatory only and are not restrictive of the
invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a purification of air according to an exemplary embodiment.
Fig. 2 is a flow chart of another method for controlling a purification of air according to an exemplary embodiment.
Fig. 3 is a block diagram of a device for controlling a purification of air according to an exemplary embodiment.
Fig. 4 is a block diagram of another device for purifying air according to an exemplary embodiment.
Fig. 5 is a block diagram of another device for purifying air according to an exemplary embodiment.
Fig. 6 is a block diagram of a calculating module according to an exemplary embodiment.
Fig. 7 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

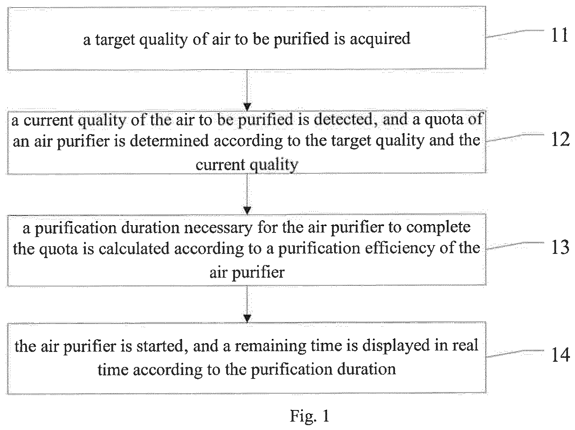

Fig. 1 is a flow chart of a method for controlling a purification of air according to an exemplary embodiment. As shown in Fig. 1, the method includes the following steps.

In step 11, a target quality of air to be purified is acquired.

With step 11, it is possible to determine the extent to which air in current environment is to be purified. The target quality is an air quality obtained after the purification of the air to be purified is completed. The air to be purified is generally air in a closed space, and the closed space may be a space which is communicated in the interior thereof and closed in the exterior thereof, but is not limited thereto.

In step 12, a current quality of the air to be purified is detected, and a required quota or amount of an air purifier is determined according to the target quality and the current quality.

It should be noted that, the larger the difference between the target quality and the current quality, the larger the quota of the air purifier is. For example, if the current quality of the air to be purified is "lightly polluted", the quota of the air purifier to purify the air to be purified to "good" from "lightly polluted" is less than the quota of the air purifier to purify the air to be purified to "excellent" from "lightly polluted".

In step 13, a purification duration necessary for the air purifier to complete the quota is calculated according to a purification efficiency of the air purifier.

Alternatively, the purification efficiency may be a volume of the air to be purified which can be purified to "target quality" from "current quality" in unit time by the air purifier, and correspondingly, the quota may be a total volume of the air to be purified which can be purified to "target quality" from "current quality".

Alternatively, the purification efficiency may be an amount of PM2.5 which can be purified in unit time by the air purifier, and correspondingly, the quota may be a total amount of PM2.5 to be purified in the process of purifying the air to be purified to "target quality" from "current quality".

In step 14, the air purifier is started, and a remaining time is displayed in real time according to the purification duration.

After the air purifier is started, a countdown is performed for the purification duration, and countdown information is displayed.

With the above steps 12 to 14, when the air needs to be purified, a purification duration necessary to complete this purification may be determined according to an air quality before the purification and an air quality after the purification, and after the air purifier is started, the countdown is performed to display the progress of air purification, such that it is convenient for a user to use the air purifier.

Alternatively, based on the method for controlling a purification of air shown in Fig. 1, in a first possible implementation, the method further includes the following steps.

In step 10, an air quality index level is set according to a concentration of PM2.5 in the air, in which the air quality index level includes "excellent", "good", "lightly polluted", "moderately polluted", "heavily polluted", and "severely polluted".

In order to facilitate the setting of the air quality index level, in this embodiment, a mapping table between an air quality index (AQI) and an AQI level is provided for reference, as shown in Table 1.

**Table 1**

| AQI | 0-50 | 51-100 | 101-150 | 151-200 | 201-300 | >300 |
|---|---|---|---|---|---|---|
| AQI level | excellent | good | lightly polluted | moderately polluted | heavily polluted | severely polluted |

The distribution of AQI is related to the concentration of PM2.5. In this embodiment, a mapping table between AQI and the concentration of PM2.5 is provided for reference, as shown in Table 2.

**Table 2**

| AQI | 0 | 50 | 100 | 150 | 200 | 300 | 400 | 500 |
|---|---|---|---|---|---|---|---|---|
| PM2.5 (µg/m³) | 0 | 35 | 75 | 115 | 150 | 250 | 350 | 500 |

Based on step 10, step 11 includes acquiring the air quality index level selected by a user, and determining the air quality index level selected by the user as the target quality of the air to be purified. For example, if the user selects "excellent" to which the air to be purified is purified, the air purifier determines that the air to be purified needs to be purified to a concentration of PM2.5 in a range of 0 to 35µg/m³.

In step 12, determining the quota of the air purifier according to the target quality and the current quality includes acquiring a total volume of the air to be purified; and determining the quota according to the total volume and a difference between concentrations of PM2.5 in unit volume of air in the target quality and the current quality.

The total volume of the air to be purified may be input by the user in advance, or may be estimated according to a historical purification record, but is not limited thereto.

Alternatively, based on the method for controlling a purification of air shown in Fig. 1, in a second possible implementation, step 13 includes: collecting a historical purification record of the air purifier, in which the historical purification record includes an air quality before purification, an air quality after purification, a purification start time point, and a purification end time point; estimating the purification efficiency of the air purifier according to the historical purification record; and calculating the purification duration necessary for the air purifier to complete the quota according to the purification efficiency of the air purifier.

For example, if there are four historical purification records about the process of purifying the air to be purified to "excellent" from "good" by the air purifier, which last for 15 minutes, 14 minutes, 16 minutes, and 15 minutes respectively, then when the air purifier purifies the air to be purified to "excellent" from "good" for a fifth time, it may be determined that the purification duration necessary for this purification is 15 minutes.

In conjunction with the first possible implementation or the second possible implementation, in step 13, the purification efficiency of the air purifier may be determined in the following manner: determining the purification efficiency of the air purifier according to a power of the air purifier and a purification capacity of a filter element in the air purifier, in which the purification efficiency is positively correlated to the power, and the purification efficiency is positively correlated to the purification capacity of the filter element.

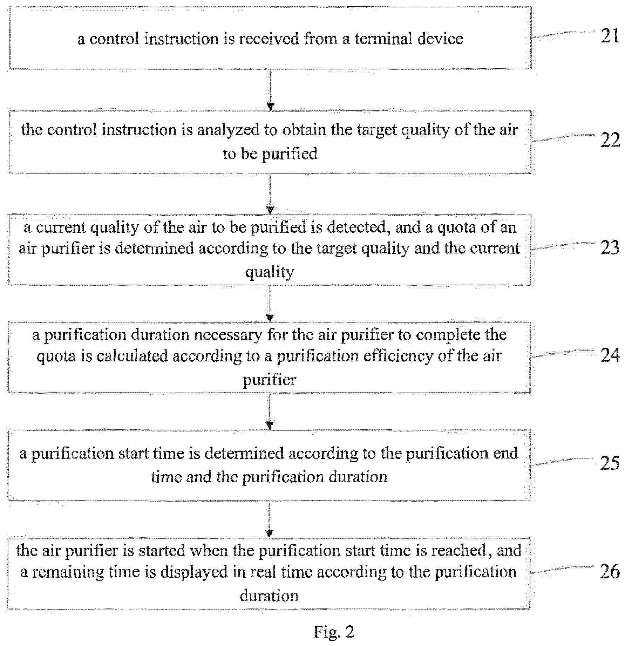

Fig. 2 is a flow chart of a method for controlling a purification of air according to an exemplary embodiment. As shown in Fig. 2, the method includes the following steps.

In step 21, a control instruction is received from a terminal device, in which the control instruction includes the target quality of the air to be purified and a purification end time of the air to be purified.

The terminal device may be a portable device having a control function, such as a mobile phone, a tablet personal computer, or the like. A user may control an air purifier by the terminal device.

In step 22, the control instruction is analyzed to obtain the target quality of the air to be purified.

In step 23, a current quality of the air to be purified is detected, and a quota of an air purifier is determined according to the target quality and the current quality.

In step 24, a purification duration necessary for the air purifier to complete the quota is calculated according to a purification efficiency of the air purifier.

In step 25, a purification start time is determined according to the purification end time and the purification duration.

In step 26, the air purifier is started when the purification start time is reached, and a remaining time is displayed in real time according to the purification duration.

With the above steps 21 to 26, the remote control of the terminal device on the air purifier may be realized, and the purification start time may be determined intelligently so as to control the air purifier. For example, if a user reaches home at 20:00, an air quality in the home is "good", and a purification duration necessary for an air purifier to adjust the air quality in the home to "excellent" from "good" is 30 minutes, then a terminal may control the air purifier to start at 19:30, such that it is possible to not only ensure that the user may respire healthy air, but also to save energy and avoid the waste of energy.

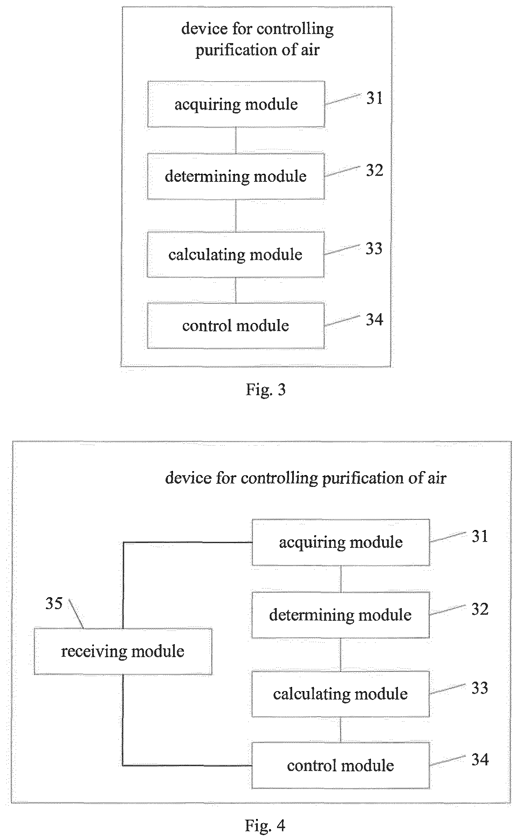

Fig. 3 is a block diagram of a device for controlling a purification of air according to an exemplary embodiment. Referring to Fig. 3, the device includes an acquiring module 31, a determining module 32, a calculating module 33, and a control module 34.

The acquiring module 31 is configured to acquire a target quality of air to be purified.

The determining module 32 is configured to detect a current quality of the air to be purified, and to determine a quota of an air purifier according to the target quality acquired by the acquiring module 31 and the current quality.

The calculating module 33 is configured to calculate a purification duration necessary for the air purifier to complete the quota determined by the determining module 32 according to a purification efficiency of the air purifier.

The control module 34 is configured to start the air purifier, and to display in real time a remaining time according to the purification duration calculated by the calculating module 33.

Alternatively, as shown in Fig. 4, the device further includes a receiving module 35 configured to receive a control instruction from a terminal device, in which the control instruction includes the target quality of the air to be purified and a purification end time of the air to be purified. The acquiring module 31 is configured to analyze the control instruction received by the receiving module 35 to obtain the target quality of the air to be purified. The control module 34 is configured to determine a purification start time according to the purification end time and the purification duration, and to start the air purifier when the purification start time is reached.

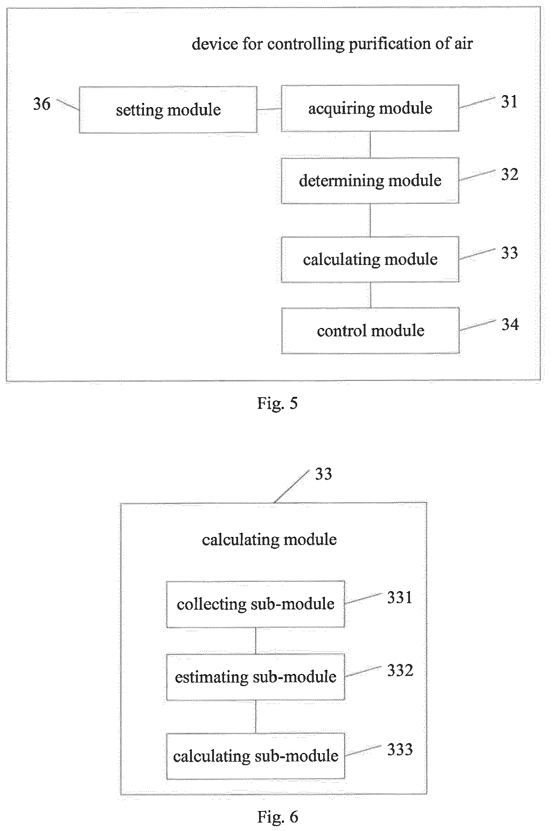

Alternatively, as shown in Fig. 5, the device further includes a setting module 36 configured to set an air quality index level according to a concentration of PM2.5 in the air, in which the air quality index level includes "excellent", "good", "lightly polluted", "moderately polluted", "heavily polluted", and "severely polluted". The acquiring module 31 is configured to acquire the air quality index level selected by a user, and to determine the air quality index level selected by the user as the target quality of the air to be purified.

The determining module 32 includes: an acquiring sub-module 321 configured to acquire a total volume of the air to be purified; and a determining sub-module 322 configured to determine the quota according to the total volume acquired by the acquiring sub-module 321 and a difference between concentrations of PM2.5 in unit volume of air in the target quality and the current quality.

Alternatively, as shown in Fig. 6, the calculating module 33 includes: a collecting sub-module 331 configured to collect a historical purification record of the air purifier, in which the historical purification record includes an air quality before purification, an air quality after purification, a purification start time point, and a purification end time point; an estimating sub-module 332 configured to estimate the purification efficiency of the air purifier according to the historical purification record collected by the collecting sub-module 331; and a calculating sub-module 333 configured to calculate the purification duration necessary for the air purifier to complete the quota according to the purification efficiency of the air purifier estimated by the estimating sub-module 332.

Alternatively, the calculating module 33 is configured to determine the purification efficiency of the air purifier according to a power of the air purifier and a purification capacity of a filter element in the air purifier, in which the purification efficiency is positively correlated to the power, and the purification efficiency is positively correlated to the purification capacity of the filter element.

With respect to the devices in the above embodiments, the specific operation modes of individual modules therein have been described in detail in the embodiments regarding the methods for controlling the purification of air, which will not be elaborated herein. Although individual modules have been described according to their respective functions, a single module may be used in place of one or more of the modules described. The modules may be implemented in software, hardware, or a combination.

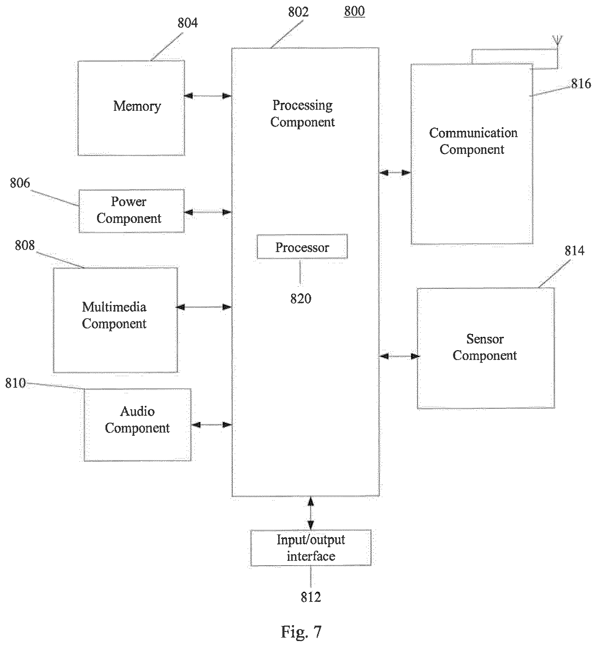

Fig. 7 is a block diagram of a device 800 for implementing the abovementioned methods for controlling the purification of air, according to an exemplary embodiment. For example, the device 800 may be a mobile phone, a computer, a digital broadcast terminal, a message transceiver, a game console, a tablet, a medical device, an exercise equipment, a personal digital assistant, and the like.

Referring to Fig. 7, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 808 includes a front camera and/or a rear camera. The front camera and the rear camera may receive external multimedia data while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800 and relative positioning of components (e.g., the display and the keypad of the device 800). The sensor component 814 may also detect a change in position of the device 800 or of a component in the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 804 including instructions. The above instructions are executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The scope of the invention is defined by the appended claims.

## Claims

1. A method for controlling a purification of air, comprising:
acquiring (11) a target quality of air to be purified;
detecting (12) a current quality of the air to be purified, and determining a quota of an air purifier according to the target quality and the current quality;
calculating (13) a purification duration necessary for the air purifier to complete the quota according to a purification efficiency of the air purifier; and
starting (14) the air purifier, and displaying in real time a remaining time according to the purification duration,
and wherein calculating the purification duration necessary for the air purifier to complete the quota according to the purification efficiency of the air purifier comprises:
collecting a historical purification record of the air purifier, wherein the historical purification record comprises an air quality before purification, an air quality after purification, a purification start time point, and a purification end time point;
estimating the purification efficiency of the air purifier according to the historical purification record; and
calculating the purification duration necessary for the air purifier to complete the quota according to the purification efficiency of the air purifier.

2. The method of claim 1, comprising:
receiving (21) a control instruction from a terminal device, wherein the control instruction comprises the target quality of the air to be purified and a purification end time of the air to be purified;
wherein acquiring the target quality of the air to be purified comprises:
analyzing (22) the control instruction to obtain the target quality of the air to be purified;
wherein starting the air purifier comprises:
determining (25) a purification start time according to the purification end time and the purification duration; and
starting (26) the air purifier when the purification start time is reached.

3. The method of claim 1 or 2, comprising:
setting an air quality index level according to a concentration of PM2.5 in the air, wherein the air quality index level comprises "excellent", "good", "lightly polluted", "moderately polluted", "heavily polluted", and "severely polluted";
wherein acquiring the target quality of the air to be purified comprises:
acquiring the air quality index level selected by a user, and determining the air quality index level selected by the user as the target quality of the air to be purified.

4. The method of claim 3, wherein determining the quota of the air purifier according to the target quality and the current quality comprises:
acquiring a total volume of the air to be purified; and
determining the quota according to the total volume and a difference between concentrations of PM2.5 in a unit volume of air in the target quality and the current quality.

5. The method of any preceding claim, wherein calculating the purification duration necessary for the air purifier to complete the quota according to the purification efficiency of the air purifier comprises:
determining the purification efficiency of the air purifier according to a power of the air purifier and a purification capacity of a filter element in the air purifier, wherein the purification efficiency is positively correlated to the power of the air purifier, and the purification efficiency is positively correlated to the purification capacity of the filter element.

6. A device for controlling a purification of air, comprising:
an acquiring module (31) configured to acquire a target quality of air to be purified;
a determining module (32) configured to detect a current quality of the air to be purified, and to determine a quota of an air purifier according to the target quality acquired by the acquiring module and the current quality;
a calculating module (33) configured to calculate a purification duration necessary for the air purifier to complete the quota determined by the determining module (32) according to a purification efficiency of the air purifier; and
a control module (34) configured to start the air purifier, and to display in real time a remaining time according to the purification duration calculated by the calculating module (33),
and wherein the calculating module comprises:
a collecting sub-module (331) configured to collect a historical purification record of the air purifier, in which the historical purification record comprises an air quality before purification, an air quality after purification, a purification start time point, and a purification end time point;
an estimating sub-module (332) configured to estimate the purification efficiency of the air purifier according to the historical purification record collected by the collecting sub-module; and
a calculating sub-module (333) configured to calculate the purification duration necessary for the air purifier to complete the quota according to the purification efficiency of the air purifier estimated by the estimating sub-module.

7. The device of claim 6, further comprising:
a receiving module (35) configured to receive a control instruction from a terminal device, wherein the control instruction comprises the target quality of the air to be purified and a purification end time of the air to be purified;
wherein the acquiring module (31) is configured to analyze the control instruction received by the receiving module (35) to obtain the target quality of the air to be purified;
wherein the control module (34) is configured to determine a purification start time according to the purification end time and the purification duration, and to start the air purifier when the purification start time is reached.

8. The device of claim 6 or 7, further comprising:
a setting module (36) configured to set an air quality index level according to a concentration of PM2.5 in the air, wherein the air quality index level comprises "excellent", "good", "lightly polluted", "moderately polluted", "heavily polluted", and "severely polluted";
wherein the acquiring module (31) is configured to acquire the air quality index level selected by a user, and to determine the air quality index level selected by the user as the target quality of the air to be purified.

9. The device of claim 8, wherein the determining module comprises:
an acquiring sub-module (321) configured to acquire a total volume of the air to be purified; and
a determining sub-module (322) configured to determine the quota according to the total volume acquired by the acquiring sub-module and a difference between concentrations of PM2.5 in unit volume of air in the target quality and the current quality.

10. The device of any of claims 6 to 9, wherein the calculating module (33) is configured to determine the purification efficiency of the air purifier according to a power of the air purifier and a purification capacity of a filter element in the air purifier, in which the purification efficiency is positively correlated to the power of the air purifier, and the purification efficiency is positively correlated to the purification capacity of the filter element.

11. A program product having stored therein instructions that causes a device of claim 6 to perform the steps of:
acquiring a target quality of air to be purified;
detecting a current quality of the air to be purified, and determining a quota of an air purifier according to the target quality and the current quality;
calculating a purification duration necessary for the air purifier to complete the quota according to a purification efficiency of the air purifier; and
starting the air purifier, and displaying in real time a remaining time according to the purification duration,
and wherein calculating the purification duration necessary for the air purifier to complete the quota according to the purification efficiency of the air purifier comprises:
collecting a historical purification record of the air purifier, wherein the historical purification record comprises an air quality before purification, an air quality after purification, a purification start time point, and a purification end time point;
estimating the purification efficiency of the air purifier according to the historical purification record; and
calculating the purification duration necessary for the air purifier to complete the quota according to the purification efficiency of the air purifier.

## Patentansprüche

1. Verfahren zum Steuern einer Luftreinigung, das Folgendes beinhaltet:
Erfassen (11) einer Zielqualität von zu reinigender Luft;
Ermitteln (12) einer aktuellen Qualität der zu reinigenden Luft und Bestimmen einer Quote für einen Luftreiniger gemäß der Zielqualität und der aktuellen Qualität;
Berechnen (13) einer Reinigungsdauer, die erforderlich ist, damit der Luftreiniger die Quote gemäß einer Reinigungseffizienz des Luftreinigers erfüllen kann; und
Starten (14) des Luftreinigers und Anzeigen einer verbleibenden Zeit gemäß der Reinigungsdauer in Echtzeit,
und wobei das Berechnen der Reinigungsdauer, die erforderlich ist, damit der Luftreiniger die Quote gemäß der Reinigungseffizienz des Luftreinigers erfüllen kann, Folgendes beinhaltet:
Sammeln eines historischen Reinigungsdatensatzes des Luftreinigers, wobei der historische Reinigungsdatensatz eine Luftqualität vor der Reinigung, eine Luftqualität nach der Reinigung, einen Reinigungsstartzeitpunkt und einen Reinigungsendzeitpunkt beinhaltet;
Schätzen der Reinigungseffizienz des Luftreinigers gemäß dem historischen Reinigungsdatensatz; und
Berechnen der Reinigungsdauer, die erforderlich ist, damit der Luftreiniger die Quote gemäß der Reinigungseffizienz des Luftreinigers erfüllen kann.

2. Verfahren nach Anspruch 1, das Folgendes beinhaltet:
Empfangen (21) eines Steuerbefehls von einem Endgerät, wobei der Steuerbefehl die Zielqualität der zu reinigenden Luft und eine Reinigungsendzeit der zu reinigenden Luft beinhaltet;
wobei das Erfassen der Zielqualität der zu reinigenden Luft Folgendes beinhaltet:
Analysieren (22) des Steuerbefehls, um die Zielqualität der zu reinigenden Luft zu erhalten;
wobei das Starten des Luftreinigers Folgendes beinhaltet:
Bestimmen (25) einer Reinigungsstartzeit gemäß der Reinigungsendzeit und der Reinigungsdauer; und
Starten (26) des Luftreinigers, wenn die Reinigungsstartzeit erreicht ist.

3. Verfahren nach Anspruch 1 oder 2, das Folgendes beinhaltet:
Einstellen eines Luftqualitätsindexniveaus gemäß einer PM2,5-Konzentration in der Luft, wobei das Luftqualitätsindexniveau "ausgezeichnet", "gut", "leicht verschmutzt", "mäßig verschmutzt", "sehr verschmutzt" und "stark verschmutzt" beinhaltet;
wobei das Erfassen der Zielqualität der zu reinigenden Luft Folgendes beinhaltet:
Erfassen des von einem Benutzer gewählten Luftqualitätsindexniveaus und Bestimmen des vom Benutzer gewählten Luftqualitätsindexniveaus als Zielqualität der zu reinigenden Luft.

4. Verfahren nach Anspruch 3, wobei das Bestimmen der Quote des Luftreinigers gemäß der Zielqualität und der aktuellen Qualität Folgendes beinhaltet:
Erfassen eines Gesamtvolumens der zu reinigenden Luft; und
Bestimmen der Quote gemäß dem Gesamtvolumen und einer Differenz zwischen den PM2,5-Konzentrationen in einem Einheitsluftvolumen in der Zielqualität und der aktuellen Qualität.

5. Verfahren nach einem vorherigen Anspruch, wobei das Berechnen der Reinigungsdauer, die erforderlich ist, damit der Luftreiniger die Quote gemäß der Reinigungseffizienz des Luftreinigers erfüllen kann, Folgendes beinhaltet:
Bestimmen der Reinigungseffizienz des Luftreinigers gemäß einer Leistung des Luftreinigers und einer Reinigungskapazität eines Filterelements im Luftreiniger, wobei die Reinigungseffizienz positiv mit der Leistung des Luftreinigers korreliert ist und die Reinigungseffizienz positiv mit der Reinigungskapazität des Filterelements korreliert ist.

6. Gerät zum Steuern einer Luftreinigung, das Folgendes umfasst:
ein Erfassungsmodul (31), konfiguriert zum Erfassen einer Zielqualität von zu reinigender Luft;
ein Bestimmungsmodul (32), das so konfiguriert ist, dass es eine aktuelle Qualität der zu reinigenden Luft ermittelt und eine Quote eines Luftreinigers gemäß der durch das Erfassungsmodul erfassten Zielqualität und der aktuellen Qualität bestimmt;
ein Berechnungsmodul (33), konfiguriert zum Berechnen einer Reinigungsdauer, die erforderlich ist, damit der Luftreiniger die durch das Bestimmungsmodul (32) bestimmte Quote gemäß einer Reinigungseffizienz des Luftreinigers erfüllen kann; und
ein Steuermodul (34), konfiguriert zum Starten des Luftreiniger und zum Anzeigen, in Echtzeit, einer verbleibenden Zeit gemäß der vom Berechnungsmodul (33) berechneten Reinigungsdauer,
und wobei das Berechnungsmodul Folgendes umfasst:
ein Sammelsubmodul (331), konfiguriert zum Sammeln eines historischen Reinigungsdatensatzes des Luftreinigers, wobei der historische Reinigungsdatensatz eine Luftqualität vor der Reinigung, eine Luftqualität nach der Reinigung, einen Reinigungsstartzeitpunkt und einen Reinigungsendzeitpunkt beinhaltet;
ein Schätzungssubmodul (332), konfiguriert zum Schätzen der Reinigungseffizienz des Luftreinigers gemäß dem historischen Reinigungsdatensatz, die von dem Sammelsubmodul gesammelt wurde; und
ein Berechnungssubmodul (333), konfiguriert zum Berechnen der Reinigungsdauer, die erforderlich ist, damit der Luftreiniger die Quote gemäß der durch das Schätzungssubmodul geschätzten Reinigungseffizienz des Luftreinigers erfüllen kann.

7. Gerät nach Anspruch 6, das ferner Folgendes umfasst:
ein Empfangsmodul (35), konfiguriert zum Empfangen eines Steuerbefehls von einem Endgerät, wobei der Steuerbefehl die Zielqualität der zu reinigenden Luft und eine Reinigungsendzeit der zu reinigenden Luft beinhaltet;
wobei das Erfassungsmodul (31) so konfiguriert ist, dass es den vom Empfangsmodul (35) empfangenen Steuerbefehl analysiert, um die Zielqualität der zu reinigenden Luft zu erhalten;
wobei das Steuermodul (34) so konfiguriert ist, dass es eine Reinigungsstartzeit gemäß der Reinigungsendzeit und der Reinigungsdauer bestimmt und den Luftreiniger startet, wenn die Reinigungsstartzeit erreicht ist.

8. Gerät nach Anspruch 6 oder 7, das ferner Folgendes umfasst:
ein Einstellmodul (36), konfiguriert zum Einstellen eines Luftqualitätsindexniveau gemäß einer PM2,5-Konzentration in der Luft, wobei das Luftqualitätsindexniveau "ausgezeichnet", "gut", "leicht verschmutzt", "mäßig verschmutzt", "sehr verschmutzt" und "stark verschmutzt" beinhaltet;
wobei das Erfassungsmodul (31) so konfiguriert ist, dass es das von einem Benutzer gewählte Luftqualitätsindexniveau erfasst und das vom Benutzer gewählte Luftqualitätsindexniveau als Zielqualität der zu reinigenden Luft bestimmt.

9. Gerät nach Anspruch 8, wobei das Bestimmungsmodul Folgendes umfasst:
ein Erfassungssubmodul (321), konfiguriert zum Erfassen eines Gesamtvolumens der zu reinigenden Luft; und
ein Bestimmungssubmodul (322), konfiguriert zum Bestimmen der Quote gemäß dem vom Erfassungssubmodul erfassten Gesamtvolumen und einer Differenz zwischen den PM2,5-Konzentrationen in einem Einheitsluftvolumen in der Zielqualität und der aktuellen Qualität bestimmt.

10. Gerät nach einem der Ansprüche 6 bis 9, wobei das Berechnungsmodul (33) so konfiguriert ist, dass es die Reinigungseffizienz des Luftreinigers gemäß einer Leistung des Luftreinigers und einer Reinigungskapazität eines Filterelements in dem Luftreiniger bestimmt, wobei die Reinigungseffizienz positiv mit der Leistung des Luftreinigers korreliert ist und die Reinigungseffizienz positiv mit der Reinigungskapazität des Filterelements korreliert ist.

11. Programmprodukt mit darin gespeicherten Befehlen, das bewirkt, dass ein Gerät nach Anspruch 6 die folgenden Schritte ausführt:
Erfassen einer Zielqualität von zu reinigender Luft;
Ermitteln einer aktuellen Qualität der zu reinigenden Luft und Bestimmen einer Quote eines Luftreinigers gemäß der Zielqualität und der aktuellen Qualität;
Berechnen einer Reinigungsdauer, die erforderlich ist, damit der Luftreiniger die Quote gemäß einer Reinigungseffizienz des Luftreinigers erfüllen kann; und
Starten des Luftreinigers und Anzeigen einer verbleibenden Zeit gemäß der Reinigungsdauer in Echtzeit,
und wobei das Berechnen der Reinigungsdauer, die erforderlich ist, damit der Luftreiniger die Quote gemäß der Reinigungseffizienz des Luftreinigers erfüllen kann, Folgendes beinhaltet:
Sammeln eines historischen Reinigungsdatensatzes des Luftreinigers, wobei der historische Reinigungsdatensatz eine Luftqualität vor der Reinigung, eine Luftqualität nach der Reinigung, einen Reinigungsstartzeitpunkt und einen Reinigungsendzeitpunkt beinhaltet;
Schätzen der Reinigungseffizienz des Luftreinigers gemäß dem historischen Reinigungsdatensatz; und
Berechnen der Reinigungsdauer, die erforderlich ist, damit der Luftreiniger die Quote gemäß der Reinigungseffizienz des Luftreinigers erfüllen kann.

## Revendications

1. Procédé de commande d'une purification de l'air, comprenant :
l'acquisition (11) d'une qualité cible de l'air à purifier ;
la détection (12) d'une qualité courante de l'air à purifier, et la détermination d'un quota d'un purificateur d'air conformément à la qualité cible et à la qualité courante ;
le calcul (13) d'une durée de purification nécessaire au purificateur d'air pour parvenir au quota conformément à un rendement de purification du purificateur d'air ; et
le démarrage (14) du purificateur d'air, et l'affichage en temps réel d'une durée restante conformément à la durée de purification,
et dans lequel le calcul de la durée de purification nécessaire au purificateur d'air pour parvenir au quota conformément au rendement de purification du purificateur d'air comprend :
la collecte d'un enregistrement de purification historique du purificateur d'air, l'enregistrement de purification historique comprenant une qualité de l'air avant purification, une qualité de l'air après purification, une heure de début de purification et une heure de fin de purification ;
l'estimation du rendement de purification du purificateur d'air conformément à l'enregistrement de purification historique ; et
le calcul de la durée de purification nécessaire au purificateur d'air pour parvenir au quota conformément au rendement de purification du purificateur d'air.

2. Procédé selon la revendication 1, comprenant :
la réception (21) d'une instruction de commande depuis un dispositif terminal, l'instruction de commande comprenant la qualité cible de l'air à purifier et un temps de fin de purification de l'air à purifier ;
dans lequel l'acquisition de la qualité cible de l'air à purifier comprend :
l'analyse (22) de l'instruction de commande pour obtenir la qualité cible de l'air à purifier
dans lequel le démarrage du purificateur d'air comprend :
la détermination (25) d'un temps de début de purification conformément au temps de fin de purification et à la durée de purification ; et
le démarrage (26) du purificateur d'air quand le temps de début de purification est atteint.

3. Procédé selon la revendication 1 ou 2, comprenant :
le réglage d'un niveau d'indice de qualité d'air conformément à une concentration de PM2.5 dans l'air, le niveau d'indice de qualité d'air comprenant "excellent", "bon", "légèrement pollué, "modérément pollué", "fortement pollué", et "sévèrement pollué" ;
dans lequel l'acquisition de la qualité cible de l'air à purifier comprend :
l'acquisition du niveau d'indice de qualité d'air sélectionné par un utilisateur, et la détermination du niveau d'indice de qualité d'air sélectionné par l'utilisateur comme qualité cible de l'air à purifier.

4. Procédé selon la revendication 3, dans lequel la détermination du quota du purificateur d'air conformément à la qualité cible et à la qualité courante comprend :
l'acquisition d'un volume total de l'air à purifier; et
la détermination du quota conformément au volume total et à une différence entre des concentrations de PM2.5 dans un volume unitaire d'air dans la qualité cible et la qualité courante.

5. Procédé selon n'importe quelle revendication précédente, dans lequel le calcul de la durée de purification nécessaire au purificateur d'air pour parvenir au quota conformément au rendement de purification du purificateur d'air comprend :
la détermination du rendement de purification du purificateur d'air conformément à une puissance du purificateur d'air et d'une capacité de purification d'un élément de filtre dans le purificateur d'air, dans lequel le rendement de purification est positivement corrélé à la puissance du purificateur d'air, et le rendement de purification est positivement corrélé à la capacité de purification de l'élément de filtre.

6. Dispositif de commande d'une purification de l'air, comprenant :
un module d'acquisition (31) configuré pour acquérir une qualité cible de l'air à purifier ;
un module de détermination (32) configuré pour détecter une qualité courante de l'air à purifier, et déterminer un quota d'un purificateur d'air conformément à la qualité cible acquise par le module d'acquisition et à la qualité courante ;
un module de calcul (33) configuré pour calculer une durée de purification nécessaire au purificateur d'air pour parvenir au quota déterminé par le module de détermination (32) conformément à un rendement de purification du purificateur d'air ; et
un module de commande (34) configuré pour démarrer le purificateur d'air, et afficher en temps réel une durée restante conformément à la durée de purification calculée par le module de calcul (33),
et dans lequel le module de calcul comprend:
un sous-module de collecte (331) configuré pour collecter un enregistrement de purification historique du purificateur d'air, l'enregistrement de purification historique comprenant une qualité de l'air avant purification, une qualité de l'air après purification, une heure de début de purification et une heure de fin de purification ;
un sous-module d'estimation (332) configuré pour estimer le rendement de purification du purificateur d'air conformément à l'enregistrement de purification historique collecté par le sous-module de collecte ; et
un sous-module de calcul (333) configuré pour calculer la durée de purification nécessaire au purificateur d'air pour parvenir au quota conformément au rendement de purification du purificateur d'air estimé par le sous-module d'estimation.

7. Dispositif selon la revendication 6, comprenant en outre :
un module de réception (35) configuré pour recevoir une instruction de commande depuis un dispositif terminal, l'instruction de commande comprenant la qualité cible de l'air à purifier et un temps de fin de purification de l'air à purifier ;
dans lequel le module d'acquisition (31) est configuré pour analyser l'instruction de commande reçue par le module de réception (35) pour obtenir la qualité cible de l'air à purifier ;
dans lequel le module de commande (34) est configuré pour déterminer un temps de début de purification conformément au temps de fin de purification et à la durée de purification ; et démarrer le purificateur d'air quand le temps de début de purification est atteint.

8. Dispositif selon la revendication 6 ou 7, comprenant en outre :
un module de réglage (36) configuré pour régler un niveau d'indice de qualité d'air conformément à une concentration de PM2.5 dans l'air, le niveau d'indice de qualité d'air comprenant "excellent", "bon", "légèrement pollué, "modérément pollué", "fortement pollué", et "sévèrement pollué" ;
dans lequel le module d'acquisition (31) est configuré pour acquérir le niveau d'indice de qualité d'air sélectionné par un utilisateur, et déterminer le niveau d'indice de qualité d'air sélectionné par l'utilisateur comme qualité cible de l'air à purifier.

9. Dispositif selon la revendication 8, dans lequel le module de détermination comprend :
un sous-module d'acquisition (321) configuré pour acquérir un volume total de l'air à purifier ; et
un sous-module de détermination (322) configuré pour déterminer le quota conformément au volume total acquis par le sous-module d'acquisition et à une différence entre des concentrations de PM2.5 dans un volume unitaire d'air dans la qualité cible et la qualité courante.

10. Dispositif selon l'une quelconque des revendications 6 à 9, dans lequel le module de calcul (33) est configuré pour déterminer le rendement de purification du purificateur d'air conformément à une puissance du purificateur d'air et à une capacité de purification d'un élément de filtre dans le purificateur d'air, dans lequel le rendement de purification est positivement corrélé à la puissance du purificateur d'air, et le rendement de purification est positivement corrélé à la capacité de purification de l'élément de filtre.

11. Produit-programme dans lequel sont mémorisées des instructions qui amènent un dispositif selon la revendication 6 à exécuter les étapes suivantes :
l'acquisition d'une qualité cible de l'air à purifier ;
la détection d'une qualité courante de l'air à purifier, et la détermination d'un quota d'un purificateur der conformément à la qualité cible et à la qualité courante ;
le calcul d'une durée de purification nécessaire au purificateur d'air pour parvenir au quota conformément à un rendement de purification du purificateur d'air ; et
le démarrage du purificateur d'air, et l'affichage en temps réel d'une durée restante conformément à la durée de purification,
et dans lequel le calcul de la durée de purification nécessaire au purificateur d'air pour parvenir au quota conformément au rendement de purification du purificateur d'air comprend :
la collecte d'un enregistrement de purification historique du purificateur d'air, l'enregistrement de purification historique comprenant une qualité de l'air avant purification, une qualité de l'air après purification, une heure de début de purification et une heure de fin de purification ;
l'estimation du rendement de purification du purificateur d'air conformément à l'enregistrement de purification historique ; et
le calcul de la durée de purification nécessaire au purificateur d'air pour parvenir au quota conformément au rendement de purification du purificateur d'air.
